# EUROPÄISCHE PATENTSCHRIFT

(11) **EP 1 530 540 B1**
(45) Veröffentlichungstag und Bekanntmachung des Hinweises auf die Patenterteilung: **31.12.2008**
(21) Anmeldenummer: 03737809.8
(22) Anmeldetag: 07.07.2003
(51) Int. Cl.: B65B 9/02, B65B 59/00, B65H 27/00, B65H 29/12

(54) **VORRICHTUNG ZUR BEARBEITUNG VON FLACHEN GEGENSTÄNDEN, INSBESONDERE ZUM VERPACKEN VON DRUCKPRODUKTEN**
DEVICE FOR PROCESSING FLAT OBJECTS, ESPECIALLY FOR PACKING PRINTED PRODUCTS
DISPOSITIF POUR TRAVAILLER SUR DES OBJETS PLATS, EN PARTICULIER POUR EMBALLER DES PRODUITS IMPRIMES

(30) Priorität: 20.08.2002 CH 142602
(43) Veröffentlichungstag der Anmeldung: 18.05.2005
(73) Patentinhaber: Ferag AG, 8340 Hinwil (CH)
(72) Erfinder: HONEGGER, Werner, CH-8806 Bäch (CH)
(74) Vertreter: Frei Patent Attorneys
(86) Internationale Anmeldenummer: PCT/CH2003/000449
(87) Internationale Veröffentlichungsnummer: WO 2004/018297

(56) Entgegenhaltungen:
- EP-A- 0 588 764
- WO-A-00/64738
- DE-A- 3 528 634
- GB-A- 1 409 077
- US-A- 3 585 097
- US-A- 4 305 240
- US-A- 5 131 973
- US-A- 5 230 268
- US-A- 6 145 562

## Beschreibung

Die Erfindung liegt auf dem Gebiete der Stückgutverarbeitung und betrifft eine Vorrichtung nach dem Oberbegriff des ersten, unabhängigen Patentanspruchs. Die erfindungsgemässe Vorrichtung dient der Bearbeitung von flachen Gegenständen, insbesondere von Druckprodukten, sie dient beispielsweise der Verpackung von einzelnen Druckprodukten oder von kleinen Gruppen von Druckprodukten.

Für verschiedenste Bearbeitungen wie beispielsweise Heften, Schneiden, Adressieren, Verpacken etc. werden Druckprodukte in Förderströmen in eine Bearbeitungsstation gefördert und aus dieser wieder weggefördert. In solchen Förderströmen liegen die Druckprodukte beispielsweise auf einer Förderauflage auf, das heisst, sie sind im wesentlichen parallel zur Förderrichtung angeordnet. Die Bearbeitungsstation ist vorteilhafterweise derart ausgerüstet, dass die Förderung der Druckprodukte für die Bearbeitung nicht unterbrochen werden muss sondern kontinuierlich betrieben werden kann. Dies bedeutet, dass Bearbeitungswerkzeuge, die über eine vorgegebene Zeit auf die Druckprodukte zu wirken haben, während dieser Zeit mit dem zu bearbeitenden Druckprodukt mitgefördert werden müssen, derart, dass sie gegenüber dem Druckprodukt mindestens in Förderrichtung keine Relativgeschwindigkeit haben.

Wenn für die Bearbeitung von Druckprodukten in solchen Förderströmen nur ein Randbereich zugänglich sein muss, sind die Druckprodukte im Förderstrom üblicherweise einander überlappend angeordnet (Schuppenstrom). Dabei ist die Grösse des zugänglichen Produkteteils abhängig vom Produkteabstand (Schuppenabstand, d.h. Abstand zwischen beispielsweise den vorlaufenden Kanten aufeinanderfolgender Produkte). Vom Format der Druckprodukte ist der zugängliche Produkteteil eigentlich nicht abhängig. Der Schuppenabstand wird also an die Art der Bearbeitung angepasst und kann dann auch bei Formatwechseln beibehalten werden.

Wenn für die Bearbeitung von Druckprodukten in Förderströmen, in denen die Produkte parallel zur Förderrichtung angeordnet sind, die ganze Fläche der Produkte zugänglich sein muss, werden die Druckprodukte auf der Förderauflage ohne Überlappung hintereinander angeordnet. Bei einer derartigen Förderung wird das Format der Produkte bzw. ihre Ausdehnung in Förderrichtung für die Produkteabstände (Vorderkante-Vorderkante) relevant. Wenn verschiedene Produkteformate in einem derartigen Förderstrom ohne entsprechende Einstellungs-Massnahmen gefördert und bearbeitet werden sollen, muss der Produkteabstand für das grösste zu verarbeitende Format bzw. für die grösste zu erwartende Produktelänge in Förderrichtung eingerichtet werden. Die Abstände (Vorderkante-Vorderkante) der Produkte sind dann immer gleich gross, die Zwischenräume (Hinterkante-Vorderkante) sind für die grössten Produkte am kleinsten, für alle anderen Produkte formatabhängig grösser. Die Förderung von unnötig grossen Zwischenräumen, was für gleiche Förderleistung eine unnötig hohe Fördergeschwindigkeit bedeutet, ist aber ein ökonomischer Nachteil.

Der genannte ökonomische Nachteil wird dann besonders relevant, wenn er nicht nur die Fördergeschwindigkeit betrifft sondern auch den Materialverbrauch für die Bearbeitung. Dies ist dann der Fall, wenn für die Bearbeitung ein Hilfsmaterial verwendet wird, das dem Förderstrom quasi endlos und kontinuierlich zugeführt wird und sich über die Produkte und die Zwischenräume erstreckt, das aber aus ökonomischen oder anderen Gründen vorteilhafterweise in einer formatabhängigen Menge eingesetzt werden sollte.

Ein typisches Beispiel einer Bearbeitung von flachen Gegenständen in einem Förderstrom unter Verwendung eines Hilfsmaterials, das dem Förderstrom vorteilhafterweise quasi endlos und kontinuierlich zugeführt wird, ist das Verpacken von Gegenständen mit Hilfe eines Verpackungsmaterials, beispielsweise einer Kunststofffolie ab Rolle. Dabei wäre es, wie oben angetönt, aus ökonomischen Gründen, gegebenenfalls aber auch aus anderen Gründen (z.B. Stabilität und ästhetische Erscheinung der Verpackung) wünschenswert, die Länge des pro zu verpackendem Gegenstand zugeführten Verpackungsmaterials möglichst genau an die Grösse dieses Gegenstandes anpassen zu können.

In der Publikation EP-0588764 ist eine Vorrichtung beschrieben, in der im wesentlichen quer zur Förderrichtung geförderte Druckprodukte während einer kontinuierlichen Förderung mit einem ab Rolle zugeführten Verpackungsmaterial verpackt werden. Die Vorrichtung ist eine Trommel mit radial angeordneten Förderabteilen, die am Trommelumfang offen sind. Das Verpackungsmaterial wird von einer Rolle abgezogen und fortlaufend auf den Grund jedes Förderabteils gezogen, so dass es, sich zick-zack-förmig von Förderabteil zu Förderabteil erstreckend in den Förderabteilen je eine V-förmige Tasche bildet. In diese Taschen wird das zu verpackende Druckprodukt positioniert, das Verpackungsmaterial wird zwischen den Förderabteilen zertrennt und das abgetrennte Stück Verpackungsmaterial wird in jedem Förderabteil um das Druckprodukt geschlossen. Für das Einziehen, das Abtrennen und das Verschliessen des Verpackungsmaterials sind in jedem Förderabteil entsprechende Werkzeuge vorgesehen. Offensichtlich können mit dieser Vorrichtung Gegenstände verschiedenen Formates verpackt werden, wobei aber das Format, des für jede Verpackung abgetrennten Stücks Verpackungsmaterial immer gleich gross und nur vom Förderabteil abhängig ist.

Die in der Publikation WO-00/64738 beschriebene Vorrichtung dient im wesentlichen demselben Zweck wie die Vorrichtung gemäss EP-0588764 und weist ebenfalls eine Bearbeitungstrommel auf, wobei die zu verpackenden Gegenstände parallel zur Förderrichtung hintereinander mit dem Verpackungsmaterial um einen Teil des Trommelumfanges geführt werden. An diesem Trommelumfang sind Werkzeuge für die Querverschliessung und Abtrennung des Verpackungsmaterials angeordnet, die sich mit den zu verpackenden Gegenständen und dem Verpackungsmaterial um den Trommelumfang bewegen. Auch in dieser Vorrichtung können Gegenstände verschiedener Formate verpackt werden, wobei aber auch hier das Format der Verpakkung gleich bleibt.

Wenn mit den oben genannten Vorrichtungen Druckprodukte oder Druckproduktegruppen eines einzigen Formates aber variierender Dicke verpackt werden sollen, ist es bereits nicht mehr möglich, nur eng am Druckprodukt anliegende Verpackungen, die das absolute Minimum an Verpackungsmaterial brauchen, zu produzieren. Ein dickeres Produkt braucht parallel zur Förderrichtung ein etwas längeres Verpakkungsmaterialstück. Dies ist insbesondere dann der Fall, wenn das Produkt ein lose ineinander gefaltetes, das heisst ungebundenes und dabei in den meisten Fällen ungeschnittenes Druckprodukt ist, wie beispielsweise eine Tageszeitung, für die sich die Dickenvariation auch auf die Breite der Faltkanten und damit auch auf die flächige Ausdehnung des Produktes auswirkt. Die genannten Vorrichtungen müssen, wenn mit Dickenvariationen gerechnet wird, für die dicksten zu erwartenden Produkte eingerichtet werden. An allen dünneren Produkten liegen die Verpackungen nicht straff an und sind grösser als unbedingt notwendig.

Dasselbe gilt, wenn verschiedene Verpackungsmaterialien, die verschiedene Nahtbreiten bedingen, verarbeitet werden sollen oder wenn die Querverbindungen in verschiedener, einen mehr oder weniger breiten Streifen des Verpackungsmaterials benötigenden Weise durchgeführt werden sollen.

In den Publikationen DE-3528634, US-4305240 oder GB-1409077 sind Vorrichtungen beschrieben, die ebenfalls mit Hilfe von trommelartigen Vorrichtungen ein quasi endloses Verpackungsmaterial durch am Trommelumfang angeordnete Schweissbacken quer verschlossen wird. Um die Distanz zwischen den Quernähten variieren zu können, wird vorgeschlagen, die Schweissbacken radial verstellbar anzuordnen. Mit diesen Vorrichtungen können in der oben beschriebenen Art Gegenstände verschiedener Formate und/oder mit verschiedenen Zwischenräumen in ein quasi endloses Verpackungsmaterial eingeschweisst werden. Da aber die Bearbeitungstrommel je nach radialer Einstellung der Schweissbacken verschiedene Durchmesser aufweist, ist es notwendig, dass das Verpackungsmaterial eine genügende Festigkeit aufweist, um sich selbst und die zu verpackenden Gegenstände ohne weitere Stützung über ein letztes Wegstück an den Trommelumfang und/oder über ein erstes Wegstück vom Trommelumfang weg zu fördern. Die genannten Vorrichtungen sind also nicht anwendbar für Verpackungsmaterialien, die die genannte Bedingung wegen mangelnder Festigkeit nicht übernehmen können, und sie sind schon gar nicht anwendbar für Bearbeitungen, die kein quasi endlos zugeführtes Hilfsmaterial benötigen.

Die Vorrichtung gemäss Erfindung soll aber gerade dies ermöglichen. Die Erfindung stellt sich also die Aufgabe, eine Vorrichtung zur Bearbeitung von in einem Förderstrom parallel zur Förderrichtung hintereinander (einander nicht überlappend) geförderten, flachen Gegenständen, insbesondere zur Bearbeitung der vor- und nachlaufenden Kantenbereiche der Gegenstände zu schaffen, wobei die Vorrichtung eine Bearbeitungstrommel mit an ihrem Umfang angeordneten Bearbeitungselementen aufweist, die zur Anpassung der Zwischenräume zwischen zu bearbeitenden Gegenständen an eine vorzunehmende Bearbeitung oder zur formatunabhängigen Konstanthaltung dieser Zwischenräume radial einstellbar sind. Dabei soll die Vorrichtung derart ausgerüstet sein, dass die genannte Einstellung keine weiteren Einstellungen bedingt und trotzdem an zu verarbeitende Materialien keine Bedingungen bezüglich Form (quasi endlos) und Festigkeit gestellt werden müssen. Insbesondere soll es mit der erfindungsgemässen Vorrichtung möglich sein, die Gegenstände des Förderstromes mit Hilfe eines quasi endlos und kontinuierlich zugeführten Verpackungsmaterials im wesentlichen unabhängig von der Dicke und vom Format der Gegenstände und auch weitgehend unabhängig von der Verpackungsart unter Verwendung eines Minimums an Verpackungsmaterial stramm anliegend zu verpacken, auch wenn das Verpackungsmaterial eine für die Verpackungsfunktion zwar genügende, für eine Stützungs- und Förderfunktion aber ungenügende Festigkeit aufweist.

Diese Aufgabe wird gelöst durch die Vorrichtung, wie sie in den Patentansprüchen definiert ist.

Die erfindungsgemässe Vorrichtung weist ein Zufördermittel, ein Wegfördermittel und eine zwischen Zufördermittel und Wegfördermittel angeordnete Bearbeitungstrommel auf. Das Zufördermittel und gegebenenfalls auch das Wegfördermittel sind ausgerüstet für die Förderung von flachen Gegenständen, die parallel zur Förderrichtung hintereinander (einander nicht überlappend) angeordnet sind. Die Bearbeitungstrommel ist um ihre, im wesentlichen horizontale Achse rotierend antreibbar und weist Stütz- und Werkzeugelemente und ein endlos umlaufendes Pressband auf. Die Stütz- und Werkzeugelemente sind abwechselnd und regelmässig um den Trommelumfang angeordnete, erstrecken sich parallel zur Trommelachse und sind radial verschiebbar. Das Pressband läuft um einen Teil des Trommelumfangs und hat dieselbe Geschwindigkeit wie der Trommelumfang (es wird vorteilhafterweise von der Trommel angetrieben. Das Pressband dient einerseits dazu, zu bearbeitendes Material während dessen Umlauf um den Trommelumfang gegen die Werkzeug- und Stützelemente zu pressen, und es dient andererseits auch dazu, dieses Material auf der letzten Wegstrecke vor dem Trommelumfang und/oder auf der ersten Wegstrecke vom Trommelumfang weg zu fördern. Das Pressband bildet also mindestens einen Teil des Zufördermittels und/oder des Wegfördermittels. Es wird damit erreicht, dass Zuförder- und/oder Wegfördermittel bei verschiedenen Trommelradien (verschiedene Einstellungen der Stütz- und Werkzeugelemente) nicht nachgestellt werden müssen und dass das zu verarbeitende Material trotzdem in jedem Moment in gestützter Weise gefördert werden kann.

Die Werkzeugelemente und die Stützelemente sind vorteilhafterweise alle derart mit einem Steuermittel wirkverbunden, dass durch Aktivierung des Steuermittels alle Stütz- und Werkzeugelemente gleichzeitig radial verstellt werden. Gegebenenfalls kann die Steuerung der Stützelemente und die Steuerung der Werkzeugelemente voneinander getrennt sein.

Eine radiale Verschiebung der Stütz- und Werkzeugelemente nach aussen bewirkt eine Vergrösserung der Abstände zwischen den Werkzeugelementen, was für gleichformatige Gegenstände eine Vergrösserung der Zwischenräume bedeutet. Eine radiale Verschiebung nach innen bedeutet eine Verkleinerung der Werkzeugabstände. Dabei bleibt bei gleichbleibender Rotationsgeschwindigkeit der Förder- bzw. Bearbeitungstakt unabhängig von der Einstellung der Stütz- und Werkzeugelemente gleich. Gegebenenfalls ist die Breite (quer zu ihrer axialen Ausdehnung) der Stützelemente an den durch radiale Verschiebung einstellbaren Abstand zwischen den Werkzeugelementen anpassbar. Die bei verschiedenen radialen Positionen von Stütz- und Werkzeugelementen bzw. bei verschiedenen Trommeldurchmessern verschiedenen Längen des um den Trommelumfang laufenden Teils des Pressbandes wird beispielsweise durch eine federnd bewegliche Umlenkrolle für das Pressband kompensiert.

Wenn die erfindungsgemässe Vorrichtung für das Verpacken der um den Umfang der Bearbeitungstrommel geförderten Gegenstände ausgerüstet ist, weist sie zusätzlich Mittel zur Zuführung des Verpackungsmaterials zum Förderstrom der Gegenstände auf und die Werkzeugelemente der Bearbeitungstrommel sind als Querverbindungsmittel und gegebenenfalls Abtrennmittel (z.B. als an sich bekannte, thermisch wirkende Schweiss- und Trennmittel zur Bearbeitung eines aus einem thermoplastischen Kunststoff bestehenden Verpackungsmaterials) ausgerüstet. Ein zugelieferter, bezüglich Fördertakt auf die Rotationsgeschwindigkeit der Bearbeitungstrommel abgestimmter Förderstrom von Gegenständen wird auf das Zufördermittel bzw. auf das Pressband abgegeben, wobei ein Förderstrom entsteht, in dem die Druckprodukte hintereinander angeordnet sind und die vorgegebenen Zwischenräume zwischen einander haben. Zu diesem Förderstrom wird das Verpackungsmaterial von zwei Seiten oder von einer Seite mit entsprechendem Umlegen um den Förderstrom zugeführt, wie dies beispielsweise in der Publikation EP-1188670 beschrieben ist. Der derart beidseitig vom Verpackungsmaterial bedeckte oder schlauchförmig umhüllte Förderstrom läuft dann auf die Bearbeitungstrommel, wobei Förderstrom und Bearbeitungstrommel derart synchronisiert sind, dass die Werkzeugelemente in die Zwischenräume zwischen den Gegenständen positioniert werden. Während der Förderung des Stromes um einen Sektor des Trommelumfangs bewirken die Werkzeugelemente, gegebenenfalls entsprechend aktiviert, die Querverschliessung des Verpackungsmaterials um die Gegenstände. Die Längsverschliessung kann im Bereich des Zufördermittels oder im Bereich der Bearbeitungstrommel durchgeführt werden oder sie kann auch fehlen (Anlegen einer Banderole). Zusätzlich zur Querverbindung können die verpackten Gegenstände bei der Förderung um die Bearbeitungstrommel auch voneinander vollständig oder teilweise getrennt werden.

Das Prinzip sowie beispielhafte Ausführungsformen der erfindungsgemässen Vorrichtung werden im Zusammenhang mit den folgenden Figuren im Detail beschrieben. Dabei zeigen:
- **Figur 1**: eine sehr schematische Darstellung der erfindungsgemässen Vorrichtung;
- **Figur 2**: ein Ausschnitt aus einer beispielhaften Ausführungsform der Bearbeitungstrommel der erfindungsgemässen Vorrichtung;
- **Figuren 3A bis 3D**: Beispiele von mit der erfindungsgemässen Vorrichtung erstellbaren Verpackungen von gleichformatigen Gegenständen (z.B. Druckprodukte oder kleine Druckproduktegruppen);
- **Figuren 4** bis 6: drei weitere, schematisch dargestellte Ausführungsformen der erfindungsgemässen Vorrichtung;
- **Figur 7**: eine weitere Ausführungsform der Ausgangsstelle für die Vorrichtung gemäss Figur 1 oder 4.

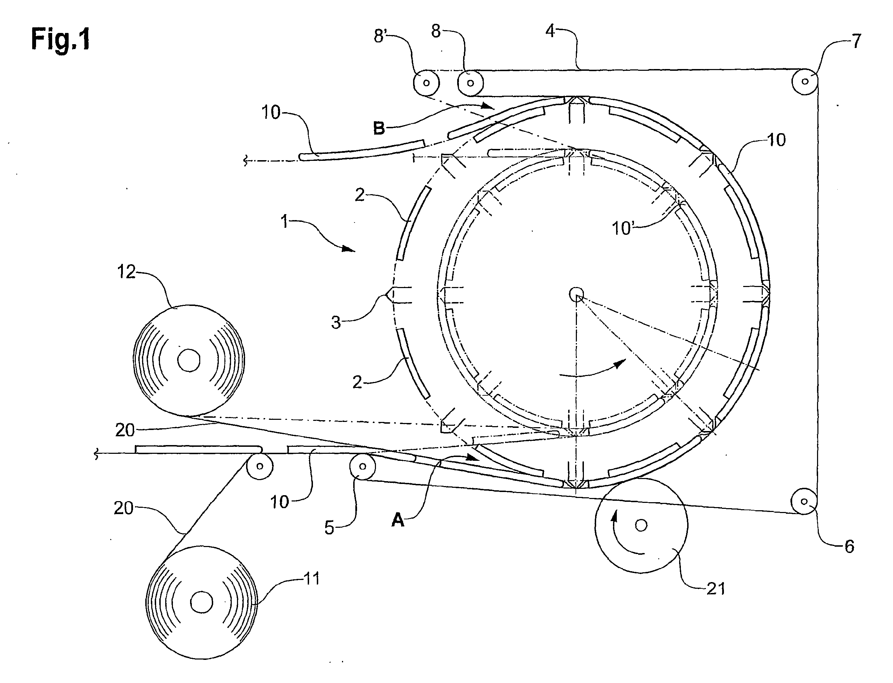

**Figur 1** zeigt sehr schematisch eine beispielhafte Ausführungsform der erfindungsgemässen Vorrichtung. Diese ist mit einem Blickwinkel parallel zur Achse der Bearbeitungstrommel 1 und in zwei bezüglich der Abstände der Werkzeugelemente verschiedenen Einstellungsmodi beispielsweise zur Bearbeitung von zwei verschiedenen Formaten von flachen Gegenständen 10 und 10' (ausgezogen und strichpunktiert) dargestellt.

Die Vorrichtung weist, wie bereits weiter oben dargelegt, eine Bearbeitungstrommel 1 mit einer im wesentlichen horizontalen Achse auf, die regelmässig und alternierend um ihren Umfang angeordnete Stützelemente 2 und Werkzeugelemente 3 aufweist. Diese Elemente 2 und 3 erstrecken sich axial über mindestens einen Teil der Trommel. Um die Bearbeitungstrommel ist ein Pressband 4 angeordnet, mit dessen Hilfe die Gegenstände 10 gegen die Trommel gepresst und dadurch auf der Trommel festgehalten werden. Das Pressband 4 läuft beispielsweise über vier passiv rotierende Umlenkrollen 5, 6, 7 und 8, wobei die Umlenkrollen derart angeordnet sind, dass das Pressband von einer Eingangsstelle A bis zu einer Ausgangsstelle B auch um einen Teil des Umfangs der Bearbeitungstrommel 1 läuft. Die eine der Umlenkrollen (z.B. die Umlenkrolle 8) ist federnd gelagert (Positionen 8 und 8'), derart, dass sie das Pressband 4 bei variierendem Umfang der Bearbeitungstrommel 1 und bei variierender Dicke der Gegenstände unter Spannung hält.

Die Umlenkrolle 5, die in Laufrichtung des Pressbandes 4 die letzte eingangsseitige Umlenkrolle des Pressbandes ist, ist derart positioniert, dass das Pressband 4 von dieser Umlenkrolle unten an die Trommel 1 läuft und dabei lose aufliegende, zu bearbeitende Gegenstände und gegebenenfalls ein quasi endloses Verpackungsmaterial stützend an den Trommelumfang fördern kann. Das Pressband 4 soll also zwischen der Umlenkrolle 5 möglichst horizontal verlaufen und übernimmt zwischen der Umlenkrolle 5 und der Eingangsstelle A die Funktion eines letzten Teils des Zufördermittels, der bei einem Antrieb des Pressbandes 4 durch die Bearbeitungstrommel 1 (passiv rotierende Umlenkrollen) eine Fördergeschwindigkeit hat, die unabhängig von der Einstellung der Stütz- und Werkzeugelemente der Umfangsgeschwindigkeit der Bearbeitungstrommel 1 im wesentlichen entspricht. Da die Position der Umlenkrolle 5 unabhängig vom Trommelradius immer dieselbe ist, können zu bearbeitende Gegenstände in diesem Bereich von einem beliebigen Zufördermittel in einer ebenfalls vom Trommeldurchmesser unabhängigen Art auf das Pressband übergeben werden.

Ein Wegfördermittel ist in der Figur 1 nicht dargestellt. Gegebenenfalls genügt es, die bearbeiteten Gegenstände (z.B. verpackt und voneinander getrennt), die gemäss Figur 1 oben an der Trommel aus der Anpressung des Anpressbandes 4 entlassen werden (Ausgangsstelle B) über eine bei einer Veränderung des Trommelradius schwenkende Rampe nach unten in einen Auffangbehälter abrutschen zu lassen.

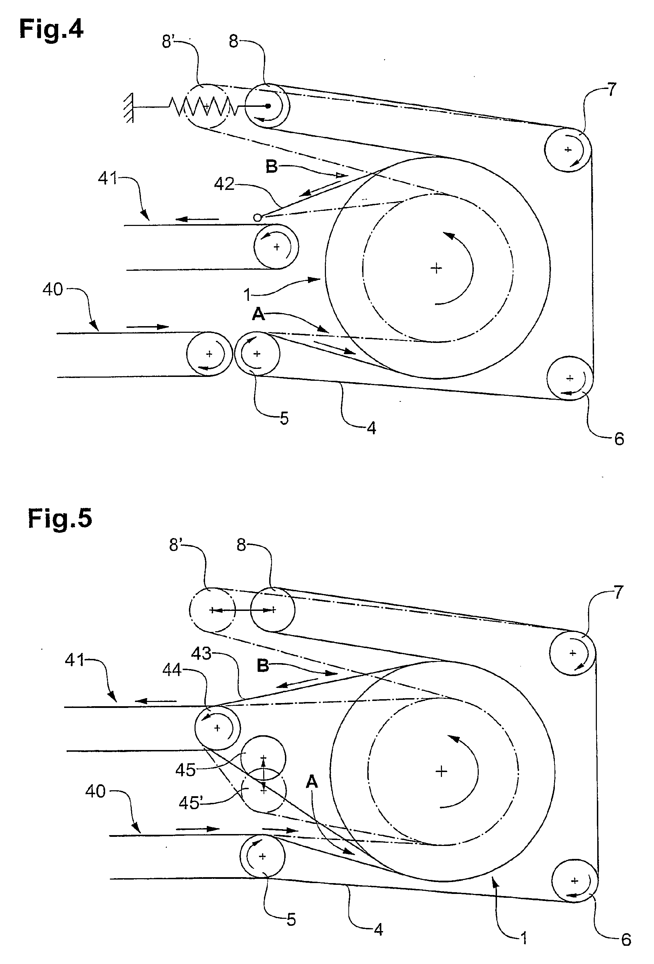

Weitere Ausführungsformen von Wegfördermitteln sind in den Figuren 4 bis 6 dargestellt.

Die in der Figur 1 dargestellte Ausführungsform der erfindungsgemässen Vorrichtung ist zum Verpacken der flachen Gegenständen 10 und 10' ausgerüstet, das heisst es wird dem Förderstrom der flachen Gegenstände vor der Eingangsstelle A beispielsweise von einer oberen und einer unteren Rolle 11 und 12 je eine Bahn von Verpackungsmaterial 20 zugeführt, das beidseitig des Förderstromes mit den flachen Gegenständen in den Eingangsbereich A gezogen wird.

Beispielsweise ist das Verpackungsmaterial 20 eine schweissbare Kunststofffolie, die Werkzeugelemente 3 sind im einfachsten Falle leicht über den durch die Stützelemente 2 definierten Trommelumfang vorstehende, axial verlaufende Heizdrähte, die kontinuierlich beheizt werden, und das Pressband 4 ist auf seiner der Bearbeitungstrommel zugewandten Seite mit Teflon beschichtet. Sobald die beiden Lagen Kunststofffolie zwischen zwei Gegenständen 10 durch einen Heizdraht gegen die Teflonbeschichtung des Pressbands 4 gepresst werden, werden die beiden Folienlagen miteinander verschweisst und beim weiteren Einwirken wird der Heizdraht durch die beiden Lagen gedrückt, wodurch sie durchtrennt werden.

Bekannterweise dauert eine Verschweissung und Trennung einer üblichen Verpakkungsfolie, wie sie oben beschrieben ist, mindestens ca. 2 Zehntelsekunden. Für die Durchführung stehen in der in Figur 1 dargestellten Vorrichtung vier Fördertakte zur Verfügung, das heisst, die gezeigte Vorrichtung kann eine Leistung bis zu etwa 20 Verpackungen pro Sekunde erbringen. Noch höhere Leistungen können erzielt werden, wenn die Vorrichtung derart ausgestaltet ist, dass zwei oder sogar mehrere, parallele Förderströme über die Bearbeitungstrommel laufen, wie dies für ein lineares System in der Publikation EP-1188670 vorgeschlagen wird. Höhere Leistungen können aber auch erzielt werden, indem der Förderstrom um einen grösseren Teil der Bearbeitungstrommel geführt wird und/oder indem um den Trommelumfang mehr Werkzeugelemente (bei entsprechend grösserem Trommelradius) angeordnet werden.

Die Längsverbindung der beiden Bahnen des Verpackungsmaterials wird beispielsweise erstellt im Bereiche der Bearbeitungstrommel 1 durch je ein beheiztes Schweissrad 21 beidseitig neben dem Pressband 4, das auf das neben den Gegenständen vorstehende Verpackungsmaterial 20 wirkt. Die Längsverbindung kann aber auch vor der Eingangsstelle A, das heisst im Bereich des Zufördermittels erstellt werden.

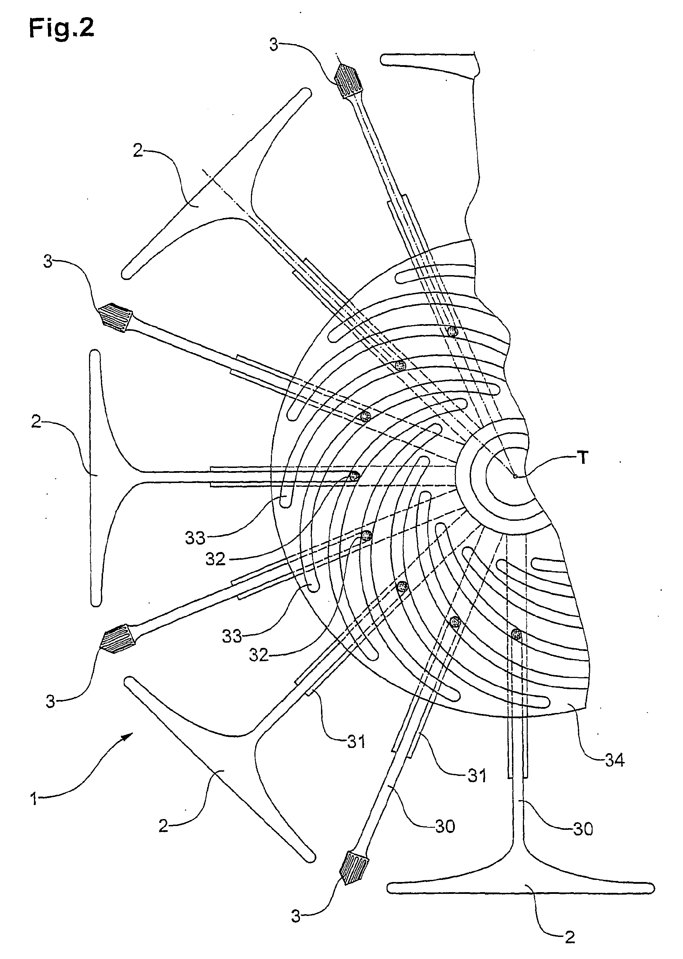

**Figur 2** zeigt eine Stirnseite einer beispielhaften Bearbeitungstrommel 1 für die erfindungsgemässe Vorrichtung. Die Stützelemente 2 und Werkzeugelemente 3 sind je auf einer radialen Stütze 30 montiert, die radial verschiebbar in einer Führung 31 geführt ist und die an ihrem inneren Ende einen axialen Steuerbolzen 32 aufweist. Die Steuerbolzen 32 laufen in Steuerschlitzen 33, die spiralig in einer relativ zur Anordnung der Stütz- und Werkzeugelemente um die Trommelachse T drehbaren Steuerscheibe 34 angeordnet sind. Im dargestellten Falle bewirkt eine Drehung der Steuerscheibe im Uhrzeigersinn eine Verschiebung der Stütz- und Werkzeugelemente gegen aussen, eine Drehung im Gegenuhrzeigersinn eine Verschiebung gegen innen.

Die Stützelemente 2 der Ausführungsform gemäss Figur 2 stellen ebene Flächen dar, es sind also, anders als mit an einen mittleren Trommelradius angepasst gebogenen Stützelementen, wie sie in der Figur 1 dargestellt sind, auch nicht biegbare Gegenstände damit bearbeitbar.

Für die Durchführung verschiedener Arten von Querverbindungen können die Werkzeugelemente 3 auswechselbar sein, wobei gegebenenfalls auch ihre radiale Position relativ zu den Stützelementen 2 variiert werden muss. In einem solchen Falle ist es vorteilhaft, für die Stützelemente 2 und für die Werkzeugelemente 3 je ein eigenes Steuermittel vorzusehen. Analog zur Ausführungsform gemäss Figur 2 sind dann anstelle der einen Steuerscheibe 34 mit sechzehn Steuerschlitzen 33 zwei Steuerscheiben mit je nur acht Steuerschlitzen vorzusehen, wobei auf jeder Stirnseite der Bearbeitungstrommel 1 eine der Steuerscheiben angeordnet sein kann.

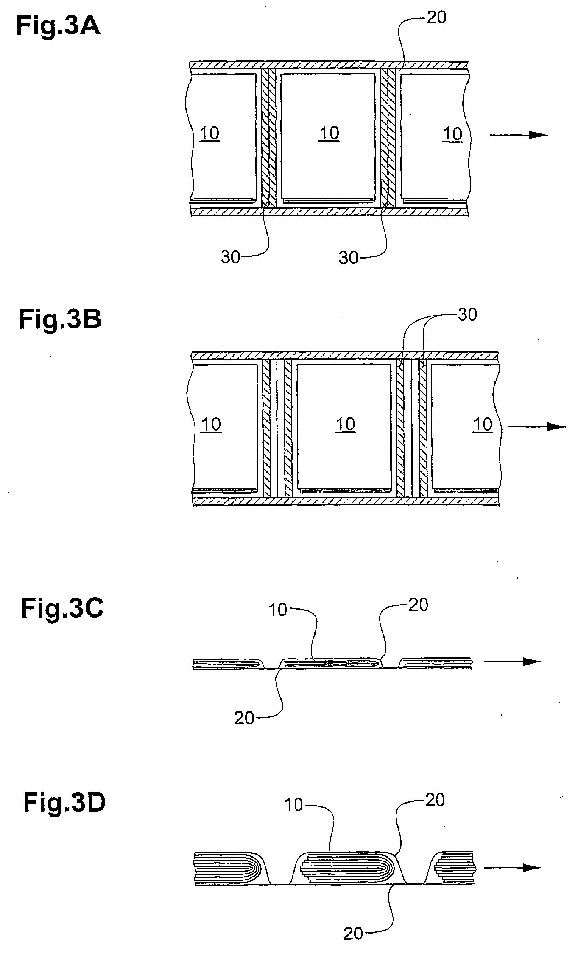

Figuren 3A bis 3D zeigen Varianten zur Verpackung von Druckprodukten oder kleinen Druckproduktegruppen, die in den dargestellten Fällen alle das gleiche Format haben, für die aber verschiedene Zwischenräume zwischen den Druckprodukten notwendig sind und die mit der erfindungsgemässen Vorrichtung problemlos nacheinander erstellbar sind.

Gemäss Figur 3A wird das Verpackungsmaterial mit einer Quernaht 30 quer verbunden und mittig durch die Quernaht getrennt. Für ein schweissbares Verpackungsmaterial und nicht sehr hohe Anforderungen an die Nähte und die Sauberkeit der Abtrennung kann diese Art von Querverbindung und -trennung mit den bereits weiter oben beschriebenen Heizdrähten vorgenommen werden, wobei die Quernaht eine minimale Breite aufweist. Für höhere Ansprüche muss die Quernaht breiter sein, das heisst, sie benötigt grössere Zwischenräume zwischen den zu verpackenden Druckprodukten. Sie wird dann vorteilhafterweise mit Schweissbacken und separaten Trennmitteln durchgeführt, wobei beide gegebenenfalls relativ zueinander bewegbar in jedem Werkzeugelement integriert sind. Die Trennmittel können auch für eine nicht vollständige Trennung (Perforierung) ausgerüstet sein oder ganz fehlen, so dass die an der Ausgangsstelle anfallenden, verpackten Druckprodukte in Form eines Faltstapels abgelegt oder auf einen Wickel aufgewickelt und in solcher Form weiter gefördert werden können.

Wenn das Verpackungsmittel nicht schweissbar ist, kann die Nahtbildung durch Prägen, durch Trennen und nachträgliches Umfalten oder durch entsprechende, an sich bekannte Verfahren erstellt werden. Für jeden Fall sind die Werkzeugelemente entsprechend auszurüsten und sind zwischen ihnen die entsprechenden Abstände einzustellen.

Figur 3B zeigt eine Querverbindung mit je zwei Quernähten 30 und einer Trennung zwischen den Quernähten, wobei auch hier die Trennung nicht eine vollständige sein muss.

Figuren 3C und 3D illustrieren die bei Dickenvariationen bei an sich gleichformatigen Gegenständen notwendige Anpassung der Zwischenräume zwischen zu verpakkenden Druckprodukten. Soll beispielsweise eine Tageszeitung in der beschriebenen Art verpackt werden, kann mit der erfindungsgemässen Vorrichtung eine entsprechende Anpassung problemlos jeden Tag für die neue Ausgabe vorgenommen werden.

**Figuren 4 bis 6** zeigen drei weitere beispielhafte Ausführungsformen der erfindungsgemässen Vorrichtung, die sehr schematisch dargestellt sind und die sich insbesondere durch die Anordnung des Pressbandes bzw. durch die Ausgestaltung des Zufördermittels und/oder Wegfördermittels von der Vorrichtung gemäss Figur 1 unterscheiden. Gleiche Elemente sind mit gleichen Bezugsziffern bezeichnet wie in den vorangehenden Figuren. Alle Vorrichtungen sind mit einem grösseren Trommelradius ausgezogen und mit einem kleineren Trommelradius strichpunktiert dargestellt. Aus den Figuren 4 bis 6 ist klar ersichtlich, dass der Betrieb der erfindungsgemässen Vorrichtung keine Anforderungen an die Festigkeit eines quasi endlosen, in die Verarbeitung zugeführten Materials (z.B. Verpackungsmaterial) stellt, da die zu bearbeitenden Gegenstände zu jedem Zeitpunkt gestützt gefördert werden. Dadurch wird die Verwendung der Vorrichtung auch für Bearbeitungen ohne ein derartiges Material ohne weiteres möglich.

Die Vorrichtung gemäss Figur 4 weist dieselbe Anordnung von Bearbeitungstrommel 1 und Pressband 4 auf wie die Vorrichtung gemäss Figur 1. Das Pressband 4 dient als letzter Teil des Zufördermittels, auf dem aufliegend die zu bearbeitenden Gegenstände an den Umfang der Bearbeitungstrommel 1 herangeführt werden, wobei dieser Zufördermittel-Teil sich automatisch an einen variierenden Trommeldurchmesser anpasst. Ein weiterer Teil des Zufördermittels (z.B. Zuförderband 40) braucht also nicht entsprechend einstellbar ausgestaltet zu sein.

Das Wegfördermittel weist ebenfalls ein ortsfestes, also nicht einstellbares Wegförderband 41 auf und eine schwenkbare Rampe 42, über die die bearbeiteten Gegenstände auf das Wegförderband 41 abrutschen. Damit die Schwenkposition der Rampe 42 sich automatisch an den Trommelumfang anpasst, ist sie vorteilhafterweise seitlich vom Förderweg der Gegenstände auf zusammen mit den Stütz- und Werkzeugelementen radial verschiebbaren Trommelelementen gegebenenfalls rollend abgestützt.

**Figur 5** zeigt eine weitere Ausführungsform der erfindungsgemässen Vorrichtung, die wiederum eine Bearbeitungstrommel 1 und ein Pressband 4 aufweisen, wie sie auch in den Figuren 1 und 4 gezeigt sind. Diese Vorrichtung weist als ersten Teil des Wegfördermittels ein weiteres, um einen Teil des Trommelumfangs laufendes Band 43 auf, das zwischen Trommelumfang und Pressband 4 angeordnet ist und das dank einer entsprechend angeordneten Umlenkrolle 44 (erste ausgangsseitige Umlenkrolle des weiteren Bandes) die Funktion eines sich automatisch an einen variierenden Trommeldurchmesser anpassenden ersten Teil des Wegfördermittels übernehmen kann, indem es auf ihm aufliegende, bearbeitete Gegenstände beispielsweise vom Trommelumfang (Ausgangsstelle B) auf ein ortsfestes Wegförderband 41 fördert. Auch das weitere Band 43 weist eine Umlenkrolle 45 (und 45') auf, die gefedert verschiebbar ist und die einerseits das Band 43 spannt und andererseits den variierenden Trommeldurchmesser kompensiert.

Da die Werkzeugelemente durch das weitere, um den Trommelumfang laufende Band 43 hindurch auf die Gegenstände oder ein Verpackungsmaterial wirken müssen, ist dieses Band 43 beispielsweise als Mehrzahl von parallel und voneinander beabstandeten Saiten ausgestaltet und weisen die Werkzeugelemente Lücken auf, durch die die Saiten verlaufen. Das Wegförderband 41 kann dabei ebenfalls aus einer Mehrzahl von Saiten bestehen, die je zwischen zwei Seiten des weiteren Bandes 43 um die Umlenkrolle 44 laufen, wodurch ein lückenloses Wegfördermittel entsteht, dessen gegen die Ausgangsstelle B gerichteter, erster Teil sich automatisch an einen variierenden Trommeldurchmesser anpasst.

In derselben Weise kann auch das Pressband 4 und das Zuförderband 40 aus Teilbändern oder Saiten bestehen die versetzt voneinander über die Umlenkrolle 5 laufen.

Mit Pfeilen ist in der Figur 5 der Förderweg der zu bearbeitenden bzw. bearbeiteten Gegenstände dargestellt, welcher Förderweg über das Zuförderband 40 und das Pressband 4 zur Eingangsstelle A, von dort auf dem Trommelumfang zur Ausgangsstelle B und von dort über das weitere Band 43 auf das Wegförderband 41 führt. Offensichtlich ist es auch möglich, die Vorrichtung in der entgegengesetzten Richtung zu betreiben, so dass das Pressband 4 den ersten Teil des Wegfördermittels und das weitere Band 43 den letzten Teil des Zufördermittels bildet.

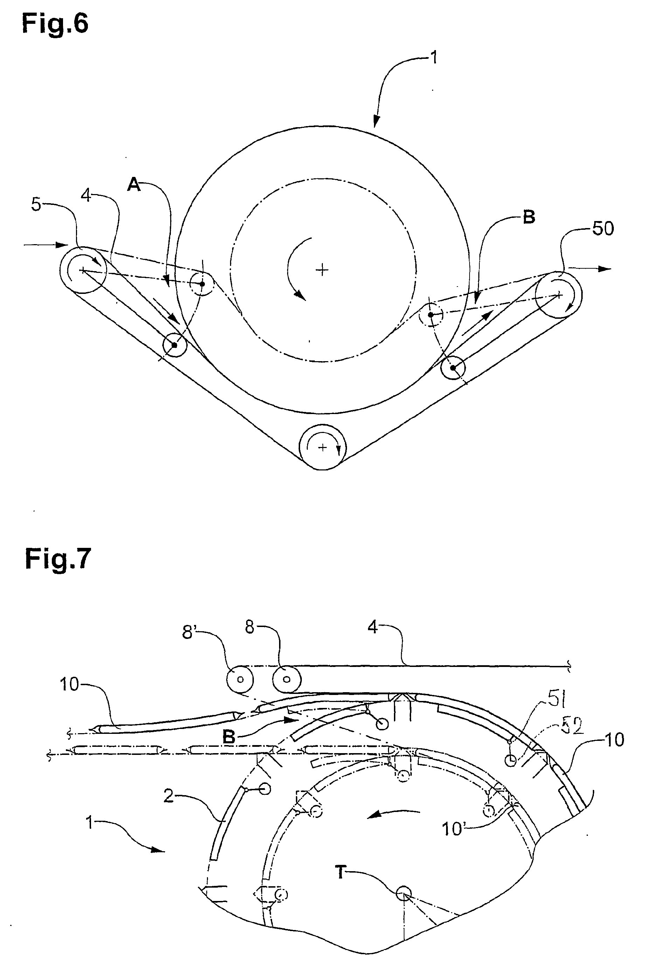

**Figur 6** zeigt eine Ausführungsform der erfindungsgemässen Vorrichtung, in der das Pressband 4 mit Hilfe einer letzten, eingangsseitigen Umlenkrolle 5 und einer ersten, ausgangsseitigen Umlenkrolle 50 sowohl als letzter Teil des Zufördermittels als auch als erster Teil des Wegfördermittels dient, welche Fördermittelteile sich automatisch an einen variierenden Trommeldurchmesser anpassen und an einen ortsfesten weiteren Fördermittelteil anschliessbar sind.

**Figur 7** zeigt in der gleichen Art wie Figur 1 eine weitere Ausführungsform der Ausgangsstelle B, die in den Vorrichtungen gemäss Figuren 1 und 4 anwendbar ist. Die Stützelemente 2 der Verarbeitungstrommel sind um eine auf der nachlaufenden Seite angeordnete Schwenkachse 51 schwenkbar und weisen jenseits der Schwenkachse Steuerrollen 52 auf. Die Steuerrollen 52 laufen bei rotierender Trommel entlang einer nicht mit der Bearbeitungstrommel drehbare aber mit den Stütz- und Bearbeitungselementen radial verschiebbare Kulisse (nicht dargestellt), die derart ausgestaltet ist, dass die Stützelemente im Bereiche der Ausgangsstelle B um die Schwenkachse verschwenkt und dadurch ihre vorlaufenden Seiten vom Trommelradius abgespreizt werden, um die bearbeiteten Gegenstände auf ein Wegfördermittel (nicht dargestellt) zu übergeben.

## Patentansprüche

1. Vorrichtung zur Bearbeitung von hintereinander und parallel zur Förderrichtung geförderten, flachen Gegenständen (10), welche Vorrichtung ein Zufördermittel und ein Wegfördermittel sowie eine um eine im wesentlichen horizontale Achse (T) rotierend antreibbare Bearbeitungstrommel (1) aufweist, wobei die Bearbeitungstrommel (1) zwischen Zufördermittel und Wegfördermittel angeordnet ist, derart, dass die Gegenstände durch das Zufördermittel in den Bereich einer Eingangstelle (A) am Umfang der Bearbeitungstrommel (1) zuförderbar sind und im Bereich einer Ausgangsstelle (B) vom Wegfördermittel wegförderbar sind, wobei die Bearbeitungstrommel (1) um ihren Umfang abwechselnd und regelmässig angeordnete Stütz- und Werkzeugelemente (2, 3) aufweist, die sich axial erstrecken und deren radiale Position einstellbar ist, und wobei die Bearbeitungstrommel ferner ein zwischen Eingangsstelle (A) und Ausgangsstelle (B) um den Umfang der Bearbeitungstrommel (1) laufendes Pressband (4) aufweist, **dadurch gekennzeichnet, dass** das Pressband (4) durch eine letzte eingangsseitige Umlenkrolle (5) und/oder durch eine erste ausgangsseitige Umlenkrolle (50) derart angeordnet ist, dass es mindestens einen letzten Teil des Zufördermittels und/oder mindestens einen ersten Teil des Wegfördermittels bildet, auf welchen Fördermittelteilen die Gegenstände (10) aufliegend zum Trommelumfang und/oder vom Trommelumfang weg förderbar sind, wobei die genannten Umlenkrollen (5, 50) eine von der radialen Position der Stütz- und Werkzeugelemente (2, 3) unabhängige, gleichbleibende Position haben und wobei an die genannten Umlenkrollen weitere Fördermittelteile in von der radialen Position der Stütz- und Werkzeugelemente (2, 3) unabhängigen Weise anschliessen.

2. Vorrichtung nach Anspruch 1, **dadurch gekennzeichnet, dass** die Eingangsstelle (A) in einem unteren und die Ausgangsstelle (B) in einem oberen Bereich der Bearbeitungstrommel (1) angeordnet ist, dass das Pressband (4) den letzten Teil des Zufördermittels bildet und dass der erste Teil des Wegfördermittels als schwenkbare Rampe (43) ausgebildet ist.

3. Vorrichtung nach Anspruch 1, **dadurch gekennzeichnet, dass** die Eingangsstelle (A) in einem unteren und die Ausgangsstelle (B) in einem oberen Bereich der Bearbeitungstrommel (1) angeordnet ist, dass das Pressband (4) den letzten Teil des Zufördermittels bildet und dass zur Übergabe der bearbeiteten Gegenstände an das Wegfördermittel vorlaufende Seiten der Stützelemente (2) an der Ausgangsstelle(B) vom Trommelradius abspreizbar sind.

4. Vorrichtung nach Anspruch 1, **dadurch gekennzeichnet, dass** die Eingangsstelle (A) in einem unteren und die Ausgangsstelle (B) in einem oberen Bereich des Umfangs der Bearbeitungstrommel (1) angeordnet ist, dass das Pressband (4) den letzten Teil des Zufördermittels bildet, dass zwischen dem Umfang der Bearbeitungstrommel (1) und dem Pressband (4) ein weiteres Band (43) zwischen der Eingangsstelle (A) und der Ausgangsstelle (B) um den Umfang der Bearbeitungstrommel (1) laufend angeordnet ist und dass das weitere Band (43) mit Hilfe einer weiteren ersten, ausgangsseitigen Umlenkrolle (44) derart angeordnet ist, dass es den ersten Teil des Wegfördermittels bildet.

5. Vorrichtung nach Anspruch 1, **dadurch gekennzeichnet, dass** die Eingangsstelle (A) in einem oberen und die Ausgangsstelle (B) in einem unteren Bereich des Umfangs der Bearbeitungstrommel (1) angeordnet ist, dass das Pressband (4) den ersten Teil des Wegfördermittels bildet, dass zwischen dem Umfang der Bearbeitungstrommel (1) und dem Pressband (4) ein weiteres Band (43) zwischen der Eingangsstelle (A) und der Ausgangsstelle (B) um den Umfang der Bearbeitungstrommel (1) laufend angeordnet ist, und dass das weitere Band (43) mit Hilfe einer weiteren, letzten eingangsseitigen Umlenkrolle derart angeordnet ist, dass es den letzten Teil des Zufördermittels bildet.

6. Vorrichtung nach einem der Ansprüche 4 oder 5, **dadurch gekennzeichnet, dass** das weitere Band (43) aus einer Mehrzahl von parallel und voneinander beabstandet angeordneten Saiten besteht.

7. Vorrichtung nach einem der Ansprüche 1 bis 6, **dadurch gekennzeichnet, dass** die Stützelemente (2) und die Werkzeugelemente (3) mit Steuermitteln wirkverbunden sind, derart, dass bei Betätigung der Steuermittel alle Stützelemente (2) und/oder alle Werkzeugelemente (3) miteinander radial verschoben werden.

8. Vorrichtung nach einem der Ansprüche 1 bis 7, **dadurch gekennzeichnet, dass** die Stützelemente (2) eine quer zu ihrer axialen Ausrichtung variierbare Breite aufweisen.

9. Vorrichtung nach einem der Ansprüche 1 bis 8, **dadurch gekennzeichnet, dass** die Bearbeitungselemente (3) für die Durchführung von unterschiedlichen Bearbeitungen auswechselbar sind.

10. Vorrichtung nach einem der Ansprüche 1 bis 9, **dadurch gekennzeichnet, dass** die Vorrichtung ferner Mittel (11, 12) zur Zuführung eines quasi endlosen Hilfsmaterials aufweist, derart, dass das Hilfsmaterial zusammen mit den Gegenständen um den Trommelumfang läuft.

11. Vorrichtung nach Anspruch 10, **dadurch gekennzeichnet, dass** die Werkzeugelemente (3) für eine Quertrennung oder für eine teilweise Quertrennung des Hilfsmaterials zwischen den Gegenständen ausgerüstet sind.

12. Vorrichtung nach Anspruch 10 oder 11, **dadurch gekennzeichnet, dass** das Hilfsmaterial ein Verpackungsmaterial (20) ist und dass die Mittel (11, 12) zur Zuführung derart ausgestaltet sind, dass das Verpackungsmaterial (20) beidseitig von den Gegenständen (10) um die Bearbeitungstrommel (1) läuft.

13. Vorrichtung nach Anspruch 12, **dadurch gekennzeichnet, dass** das Verpakkungsmaterial (20) eine schweissbare Verpackungsfolie ist und dass die Werkzeugelemente (3) Schweissmittel aufweisen.

14. Vorrichtung nach Anspruch 13, **dadurch gekennzeichnet, dass** die Werkzeugelemente (3) axial zur Bearbeitungstrommel (1) verlaufende Schweissdrähte aufweisen, die über den durch die Stützelemente (2) definierten Trommelumfang vorstehen, die im wesentlichen kontinuierlich beheizt werden und die mit einer auf dem Pressband (4) angeordneten Teflonschicht kooperieren.

15. Verwendung der Vorrichtung nach einem des Ansprüche 1 bis 14 für die Verpackung von Druckprodukten oder von kleinen Gruppen von Druckprodukten.

## Claims

1. Installation for processing flat objects (10) conveyed consecutively and parallel to the conveying direction, which installation comprises a supply means, a removal means and a processing drum (1) being driven in rotation around an essentially horizontal axis (T), wherein the processing drum (1) is arranged between the supply means and the removal means in such a way that the objects are supplied by the supply means to an entry point (A) at the periphery of the processing drum (1) and are removed from the periphery of the processing drum at an exit point (B) by the removal means, wherein the processing drum (1) comprises regularly alternating support elements (2) and tool elements (3) which extend axially and whose radial position is adjustable, and wherein the processing drum further comprises a pressing belt (4) running on the periphery of the processing drum (1) between the entry point (A) and the exit point (B), **characterized in that** the pressing belt (4) is arranged by means of a last deflection roller (5) before the entry point and/or by means of a first deflection roller (50) after the exit point to form at least a last part of the supply means and/or at least a first part of the removal means, upon which part the objects (10) are able to be conveyed to the drum periphery and/or away from the drum periphery, wherein said deflection rollers (5, 50) have a position which is independent of the radial position of the support and tool elements and wherein further conveyor parts are arranged to adjoin said deflection rollers in a manner which is independent of the radial position of the support and tool elements.

2. Installation according to claim 1, **characterized in that** the entry point (A) is situated in a lower, and the exit point (B) in an upper area of the processing drum (1), that the pressing belt (4) forms the last part of the supply means and that the first part of the removal means is a pivoting ramp (43).

3. Installation according to claim 1, **characterized in that** the entry point (A) is situated in a lower, and the exit point (B) in an upper area of the processing drum (1), that the pressing belt (4) forms the last part of the supply means, and that, for transferring the processed objects to the removal means, the downstream sides of the support elements (2) are designed to spread from the drum periphery at the exit point (B).

4. Installation according to claim 1, **characterized in that** the entry point (A) is situated in a lower, and the exit point (B) in an upper area of the periphery of the processing drum (1), that the pressing belt (4) forms the last part of the supply means, that a further belt (43) is arranged to run between the periphery of the processing drum (1) and the pressing belt (4) and to run on the periphery of the processing drum (1) between the entry point (A) and the exit point (B), and that the further belt (43) is arranged, by way of another first deflection roller (44) after the exit point to form the first part of the removal means.

5. Installation according to claim 1, **characterized in that** the entry point (A) is arranged in a lower, and the exit point (B) in an upper area of the periphery of the processing drum (1), that the pressing belt (4) forms the last part of the supply means, that a further belt (43) is arranged to run between the periphery of the processing drum (1) and the pressing belt (4) and to run on the periphery of the processing drum (1) between the entry point (A) and the exit point (B), and that the further belt (43) is arranged, by way of another last deflection roller (44) after the exit point to forms the last part of the supply means.

6. Installation according to any one of claims 4 or 5, **characterized in that** the further belt (43) consists of a plurality of pitched parallel strings.

7. Installation according to any one of claims 1 to 6, **characterized in that** the support elements (2) and the tool elements (3) are interconnected with a control means such that by activating the control means all support elements (2) and/or all tool elements (3) are simultaneously displaced radially.

8. Installation according to any one of claims 1 to 7, **characterized in that** the support elements (2) comprise a variable width at right angles to their axial extension.

9. Installation according to any one of claims 1 to 8, **characterized in that**, for differing processes, the tool elements (3) are exchangeable.

10. Installation according to any one of claims 1 to 9, **characterized in that** the installation further comprises means (11, 12) to supply a web of an auxiliary material such that the auxiliary material and the objects move along the drum periphery together.

11. Installation according to claim 10, **characterized in that** the tool elements (3) are equipped to separate or partly separate the auxiliary material between the objects.

12. Installation according to claim 10 or 11, **characterized in that** the auxiliary material is a packing material (20) and that further supply means (11, 12) are designed in such away that the packing material (20) travels on both sides of the objects (10) on the processing drum (1).

13. Installation according to claim 12, **characterized in that** the packing material (20) is a weldable packaging foil and that the tool elements (3) comprise welding means.

14. Installation according to claim 13, **characterized in that** the tool elements (3) comprise welding wires extending in the direction of an axis of the processing drum (1), which welding wires protrude from the drum periphery defined by the support elements (2) and are essentially continuously heated and co-operate with a Teflon-coating on the pressing belt (4).

15. Use of the installation 1 to 14 for packing printed products or small groups of printed products.

## Revendications

1. Dispositif de traitement d'objets plats (10) transportés les uns derrière les autres parallèlement à une direction de transport,
lequel dispositif présente un moyen d'amenée et un moyen d'éloignement ainsi qu'un tambour de traitement (1) qui peut être entraîné en rotation autour d'un axe (T) essentiellement horizontal,
le tambour de traitement (1) étant disposé entre le moyen d'amenée et le moyen d'éloignement de telle sorte que le moyen d'amenée puisse amener les objets dans la zone occupée par un emplacement d'entrée (A) situé à la périphérie du tambour de traitement (1) et que le moyen d'éloignement puisse les éloigner dans la zone occupée par un emplacement de sortie (B),
le tambour de traitement (1) présentant à sa périphérie des éléments de soutien et des éléments d'outil (2, 3) disposés en alternance régulière, qui s'étendent axialement et dont la position radiale est ajustable,
le tambour de traitement présentant en outre une bande de pressage (4) qui s'étend autour de la périphérie du tambour de transport (1) entre l'emplacement d'entrée (A) et l'emplacement de sortie (B),
**caractérisé en ce que**
la bande de pressage (4) passe sur un dernier rouleau de renvoi (5) situé du côté de l'entrée et/ou sur un premier rouleau de renvoi (50) situé du côté de la sortie de manière à former au moins une dernière partie du moyen d'amenée et/ou au moins une première partie du moyen d'éloignement, les objets (10) placés debout pouvant être amenés vers la périphérie du tambour et/ou éloignés de la périphérie du tambour,
**en ce que** lesdits rouleaux de renvoi (5, 50) ayant une position constante indépendante de la position radiale des éléments de soutien et des éléments d'outils (2, 3) et
**en ce que** d'autres parties du moyen de transport se raccordent auxdits rouleaux de renvoi d'une manière indépendante de la position radiale des éléments de soutien et des éléments d'outil (2, 3).

2. Dispositif selon la revendication 1, **caractérisé en ce que** l'emplacement d'entrée (A) est disposé dans une partie inférieure du tambour de traitement (1) et l'emplacement de sortie (B) dans une partie supérieure de ce tambour, **en ce que** la bande de pressage (4) forme la dernière partie du moyen d'amenée et **en ce que** la première partie du moyen d'éloignement est configurée en rampe (43) inclinable.

3. Dispositif selon la revendication 1, **caractérisé en ce que** l'emplacement d'entrée (A) est disposé dans la partie inférieure du tambour de traitement (1) et l'emplacement de sortie (B) dans une partie supérieure de ce tambour, **en ce que** la bande de pressage (4) forme la dernière partie du moyen d'amenée et **en ce que** le côté avant des éléments de soutien (2) peut être écarté du rayon du tambour à l'emplacement de sortie (B) pour transférer les objets traités au moyen d'éloignement.

4. Dispositif selon la revendication 1, **caractérisé en ce que** l'emplacement d'entrée (A) est disposé dans la partie inférieure de la périphérie du tambour de traitement (1) et l'emplacement de sortie (B) dans la partie supérieure de la périphérie de ce tambour, **en ce que** la bande de pressage (4) forme la dernière partie d'un moyen d'amenée, **en ce qu'**une autre bande (43) située entre la périphérie du tambour de traitement (1) et la bande de pressage (4) se déplace sur la périphérie du tambour de traitement (1) entre l'emplacement d'entrée (A) et l'emplacement de sortie (B) et **en ce que** l'autre bande (43) est disposée de manière à former la première partie du moyen d'éloignement grâce à un autre premier rouleau de renvoi (44) situé du côté de la sortie.

5. Dispositif selon la revendication 1, **caractérisé en ce que** l'emplacement d'entrée (A) est disposé dans la partie supérieure de la périphérie du tambour de traitement (1) et l'emplacement de sortie (B) dans la partie inférieure de la périphérie de ce tambour, **en ce que** la bande de pressage (4) forme la première partie du moyen d'éloignement, **en ce qu'**une autre bande (43) située entre la périphérie du tambour de traitement (1) et la bande de pressage (4) se déplace à la périphérie du tambour de traitement (1) entre l'emplacement d'entrée (A) et l'emplacement de sortie (B) et **en ce que** l'autre bande (43) est disposée de manière à former la dernière partie du moyen d'amenée grâce à un autre dernier rouleau de renvoi situé du côté de l'entrée.

6. Dispositif selon l'une des revendications 4 ou 5, **caractérisé en ce que** l'autre bande (43) est constituée de plusieurs câbles parallèles disposés à distance les uns des autres.

7. Dispositif selon l'une des revendications 1 à 6, **caractérisé en ce que** les éléments de soutien (2) et les éléments d'outil (3) sont reliés fonctionnellement à des moyens de commande de telle sorte que tous les éléments de soutien (2) et/ou tous les éléments d'outil (3) sont déplacés radialement ensemble lorsque les moyens de commande sont actionnés.

8. Dispositif selon l'une des revendications 1 à 7, **caractérisé en ce que** la largeur des éléments de soutien (2) peut varier transversalement par rapport à leur orientation axiale.

9. Dispositif selon l'une des revendications 1 à 8, **caractérisé en ce que** les éléments de traitement (3) peuvent être remplacés pour exécuter différents traitements.

10. Dispositif selon l'une des revendications 1 à 9, **caractérisé en ce que** le dispositif présente en outre des moyens (11, 12) qui amènent un matériau auxiliaire quasi sans fin de telle sorte que le matériau auxiliaire passe autour de la périphérie du tambour en même temps que les objets.

11. Dispositif selon la revendication 10, **caractérisé en ce que** les éléments d'outil (3) sont équipés pour réaliser une séparation transversale ou une séparation transversale partielle du matériau auxiliaire entre les objets.

12. Dispositif selon les revendications 10 ou 11, **caractérisé en ce que** le matériau auxiliaire est un matériau d'emballage (20) et **en ce que** les moyens (11, 12) pour leur amenée sont configurés de telle sorte que le matériau d'emballage (20) se déplace autour du tambour de traitement (1) des deux côtés des objets (10).

13. Dispositif selon la revendication 12, **caractérisé en ce que** le matériau d'emballage (20) est une feuille d'emballage soudable et **en ce que** les éléments d'outil (3) sont des moyens de soudage.

14. Dispositif selon la revendication 13, **caractérisé en ce que** les éléments d'outil (3) présentent des fils de soudage qui s'étendent axialement par rapport au tambour de traitement (1), qui débordent de la périphérie du tambour définie par les éléments de soutien (2), qui sont chauffés de manière essentiellement continue et qui coopèrent avec une couche de Teflon disposée sur la bande de pressage (4).

15. Utilisation du dispositif selon l'une des revendications 1 à 14 pour l'emballage de produits d'imprimerie ou de petits groupes de produits d'imprimerie.
